(19) Europäisches Patentamt

European Patent Office

Office européen des brevets

(11) EP 1 118 887 B1

(12) EUROPEAN PATENT SPECIFICATION

(45) Date of publication and mention
of the grant of the patent:
**08.11.2006 Bulletin 2006/45**

(51) Int Cl.:
*G02B 6/02* (2006.01)     *G02B 6/036* (2006.01)

(21) Application number: **01101298.6**

(22) Date of filing: **19.01.2001**

(54) **Photonic crystal fibre (PCF) having multiple cladding layers**

Photonenkristallglasfaser (PCF) mit mehreren Mantelschichten

Fibre à cristal photonique (PCF) avec plusieurs couches de gaine

(84) Designated Contracting States:
**DE DK FR GB IT**

(30) Priority: **21.01.2000 JP 2000013174**
**21.01.2000 JP 2000013175**
**11.05.2000 JP 2000138738**

(43) Date of publication of application:
**25.07.2001 Bulletin 2001/30**

(73) Proprietor: **Sumitomo Electric Industries, Ltd.**
**Osaka-shi,**
**Osaka 541-0041 (JP)**

(72) Inventors:
• **Hasegawa, Takemi,**
**Yokohama Works of Sumitomo**
**Yokohama-shi,**
**Kanagawa 244-8588 (JP)**
• **Sasaoka, Eisuke,**
**Yokohama Works of Sumitomo**
**Yokohama-shi,**
**Kanagawa 244-8588 (JP)**
• **Nishimura, Masayuki,**
**Yokohama Works of Sumitomo**
**Yokohama-shi,**
**Kanagawa 244-8588 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 905 834      EP-A- 1 054 273**
**WO-A-01/98819      US-A- 5 448 674**
**US-A- 5 802 236**

• **WADSWORTH W J ET AL: "Soliton effects in photonic crystal fibres at 850 nm" ELECTRONICS LETTERS, IEE STEVENAGE, GB, vol. 36, no. 1, 6 January 2000 (2000-01-06), pages 53-55, XP002145125 ISSN: 0013-5194**

**Description**

BACKGROUND OF THE INVENTION

Field of the Invention

The present invention relates to an optical fiber which can be suitably used as an optical transmission path and a dispersion compensator.

Related Background Art

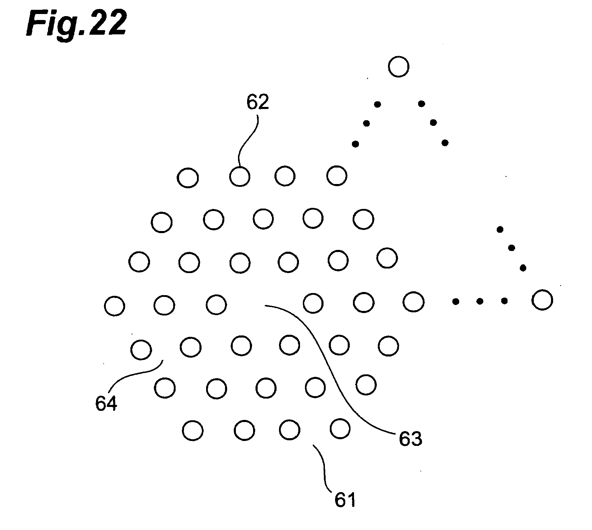

Fig. 22 is a cross-sectional view of an optical fiber including a so-called microstructure which has been known conventionally. As shown in Fig. 22, this optical fiber has a cross-sectional structure having a large number of voids (vacant holes) 62 in a silica glass 61. A central portion in the cross section having no voids 62 constitutes a core region 63 and a portion, surrounding the core region 63, which has a large number of voids 62 constitutes a cladding region 64.
The principle of light confinement of an optical fiber having such a microstructure is explained qualitatively using a concept called effective refractive indices (see for example, T. A. Birks et al. Optics Letters Vol. 22 p.961 (1997)). Due to the existence of the microstructure, in a strict sense, the refractive indices in the core region 63 and the cladding region 64 should have a complicated distribution. However, on the assumption that the optical guide characteristics can be approximated by replacing respective regions with uniform mediums, the refractive indices of these uniform mediums are called the effective refractive indices. The effective refractive indices $n_{eff}$ satisfy the following equation.

$$\left( \frac{f_1}{n_1^2} + \frac{f_2}{n_2^2} \right)^{-1} \leq n_{eff}^2 \leq f_1 n_1^2 + f_2 n_2^2 \quad \dots \ (1)$$

where n is the refractive index and f is the volume fraction. Further, suffix 1 indicates silica glass and suffix 2 indicates air. With respect to the volume fraction, $f_1 + f_2 = 1$ is established. Usually, since $n_1 > n_2$, both side members of the equation (1) become smaller corresponding to the increase of $f_2$. Accordingly, the effective refractive index of the cladding region 64 having a large number of voids 62 becomes smaller than the effective refractive index of the core region 63 so that the light confinement is realized in the same manner as in the usual optical fiber.
An optical fiber comprising a low refractive index intermediate cladding comprising voids is disclosed in EP 0 905 834. The optical fiber comprises a core, an inner cladding of homogeneous material, a first outer cladding comprising the intermediate cladding containing voids, followed by a second outer cladding of homogeneous material. The first outer cladding is selected to have an effective refractive index such that the optical characteristics of the optical fiber are essentially independent of the second outer cladding.
Such a model of the effective refractive indices as defined by equation 1 is considered to be reasonable in the case that the optical wavelength is large compared to the scale of the microstructure. However, as the optical wavelength becomes shorter, the light is locally concentrated at portions having high refractive index and hence, although the effective refractive indices are elevated, simultaneously, it is considered that the assumption that the structure having refractive index distribution can be replaced by uniform media will lose validity.
On the other hand, an optical fiber having a greater negative chromatic dispersion than such an optical fiber is disclosed in USP 5,802,236, for example. Although this optical fiber has the above-mentioned microstructure, the optical fiber is characterized in that a cladding region is constituted by an inner cladding region and an outer cladding region and the effective refractive index of the inner cladding region is smaller than that of the outer cladding region.

SUMMARY OF THE INVENTION

However, although the optical fiber disclosed in the above-mentioned publication increases the negative chromatic dispersion compared to the optical fiber having a uniform cladding structure, the optical fiber suffers from drawbacks such as lowering of effective core area, increase of bending loss and increase of sensitivity to the fluctuation of the structural parameters of the effective core area.
The present invention has been made in view of the above and it is an object of the present invention to provide an optical fiber which can simultaneously realize all of: large negative chromatic dispersion, large effective core area and small bending loss.
The present invention achieves such an object by providing an optical fiber comprising the features set out in claim 1.

Here, although the main medium must be a material which can constitute the optical fiber by itself, the sub medium may be a material which cannot constitute the optical fiber by itself such as a gas or liquid, for example.

In general, the magnitude of the negative chromatic dispersion, the magnitude of the negative chromatic dispersion slope and the magnitude of the effective core area have a trade-off relationship with the lowering of the bending loss. However, according to the present invention, it becomes possible to lower the bending loss compared to the conventional impurity-doped optical fiber. Further, provided that the bending loss is equal, negative chromatic dispersion having a larger absolute value, negative chromatic dispersion slope having a larger absolute value and larger effective core area compared to a conventional impurity-doped optical fiber can be realized.

According to the optical fiber of the present invention, the core region is constituted by a substantially homogeneous medium and the cladding region is constituted by an inner cladding region of two layers made of a substantially homogeneous medium and an outer cladding region which surrounds the inner cladding region and is provided with regions made of a sub-medium.

The fact that a certain region is constituted by a substantially homogeneous material implies that the region does not include microstructures and it may be possible to suitably adopt a constitution where the concentration of the impurity in a material which constitutes the region is varied within the region. For example, the region may adopt a constitution in which the region may be constituted by silica glass containing Ge as the impurity and the concentration of Ge is gradually decreased from the center to the outer periphery.

In order to realize optical properties of optical fiber, for example chromatic dispersion, as desired, it is necessary to precisely fabricate the structures in the core region and the inner cladding region. Structures constituted by a substantially homogeneous material, such as silica glass, are easier to precisely fabricate than those containing regions made of a sub-medium such as air. Therefore, desired optical properties are easier to realize in the optical fiber according to the present invention than in the conventional microstructured optical fibers. Moreover, induction of sub-medium regions makes it possible to lower the mean refractive index in the outer cladding region to a level which is practically unachievable by a homogeneous material alone. As a result, the optical fiber according to the present invention can realize a lower bending loss than the conventional impurity-doped optical fibers can.

Further, the inner cladding region has a two-layer structure consisting of a first inner cladding layer and a second inner cladding layer and the following relationships hold among the respective refractive indices $n_0$, $n_1$, $n_2$ of the core, the first inner cladding, the second inner cladding and the mean refractive index $n_3$ of the outer cladding region:

$$n_0 > n_2 > n_1 \text{ and } n_2 > n_3$$

By lowering the mean refractive index of the outer cladding region, it becomes possible to lower the bending loss compared to conventional impurity-doped optical fiber. Further, with the presence of the first inner cladding layer having the low refractive index, negative chromatic dispersion having a large absolute value can be obtained. Further, since the outer cladding region in which the sub-medium regions are present is remote from the core region, the excess optical loss can be suppressed to a low level compared to conventional optical fiber having microstructures.

It is preferable to arrange the sub-medium regions in the outer cladding region as having four-fold rotational symmetry substantially established with respect to the fiber axis. Thereby the mode birefringence $B = (\beta_1 - \beta_2)/k$ can be made small and hence, polarization mode dispersion can be made small whereby the optical fiber can be used for transmission of optical signals of high bit rate. Here, $\beta_1$ and $\beta_2$ are the propagation coefficients of two polarization modes and k is the wave number in vacuum.

It is preferable that the main medium of the outer cladding region is made of silica and the sub-medium regions are gaseous or vacuum for suppressing the transmission loss to a low level.

It is preferable that the relative mean refractive index difference of the core region to the outer cladding region is set to not less than 2 %.

Due to such a provision, the mean refractive index of the outer cladding region becomes relatively low and the leakage of the electromagnetic field to the outer cladding region is suppressed and hence, the bending loss at a given wavelength can be reduced.

It is preferable that the relative mean refractive index difference of the first inner cladding layer relative to the second inner cladding layer is set to not more than -0.1 %. Due to such a constitution, the negative chromatic dispersion or the negative chromatic dispersion slope can be obtained at a given wavelength so that a suitable optical fiber can be obtained which compensates for the positive chromatic dispersion and the positive chromatic dispersion slope.

It is preferable that the ratio of the optical power which propagates through the microstructures of the outer cladding region to the total propagating power is set to not more than 1 %. This is because when the optical power which propagates through the microstructures of the outer cladding region is increased, the optical fiber becomes more vulnerable to the excess optical loss caused by impurities in the microstructures, and such a provision reduces an excess transmission loss and makes the optical fiber robust to such impurities.

It is preferable to operate the optical fiber in a single mode at a given wavelength since the inter-mode dispersion can be eliminated and hence, it becomes possible to use the optical fiber for the transmission of an optical signal of high bit rate.

By setting the chromatic dispersion at a given wavelength to a value below -60 ps/nm/km, the length of the optical fiber necessary for compensating for the positive chromatic dispersion can be shortened. When an optical transmission path is constituted by combining this optical fiber and an optical fiber having positive chromatic dispersion at a given wavelength, an optical fiber transmission path having small cumulative chromatic dispersion and capable of performing large capacity communication can be realized.

BRIEF DESCRIPTION OF THE DRAWINGS

Fig. 1 is a view showing the division into regions on a cross section of an optical fiber according to a fundamental mode of the present invention.

Fig. 2 is a transverse cross-sectional view showing the microstructure of an optical fiber which does not form part of the present invention.

Fig. 3 is a view for explaining the definition of the mean refractive indices of the optical fiber in this specification.

Fig. 4 and Fig. 5 are views respectively showing the cross-sectional structures of optical fibers of first and second embodiments which do not form part of the present invention.

Fig. 6 and Fig. 7 are views respectively showing the distribution of the mean refractive indices of examples 1, 3.

Fig. 8 is a view showing the calculated result of the waveguide dispersion and the effective core area of the example 1 and the comparison examples 1, 2 in a comparison form.

Fig. 9 is a view showing the calculated result of the waveguide dispersion and the effective core area of the example 1a and the comparison examples 1a, 2a in a comparison form.

Fig. 10 and Fig. 11 are views showing the relationship between the effective core area $A_{eff}$ and the propagation coefficient $\beta$ of the comparison example 2 and the examples 2, 3 in a comparison form, wherein the effective core area $A_{eff}$ is normalized with the square value of a pitch of voids in Fig. 10 and the effective core area $A_{eff}$ is normalized by the square value of the wavelength $\lambda$ in Fig. 11.

Fig. 12 and Fig. 13 are views showing the calculated result of the effective core area for the wavelength in comparison example 2 and the examples 2, 3 in a comparison form, wherein the pitch L differs between the Fig. 12 and Fig. 13.

Fig. 14 is a cross-sectional view of an optical fiber of an embodiment of the present invention.

Fig. 15 is a graph showing the ratio of optical power which propagates through a jacket region $P_{jacket}/P$ and the ratio of optical power which propagates through void $P_{air}/P$ in the comparison example 3 and examples 4 - 6 in a comparison form.

Fig. 16 is a cross-sectional view of a conventional optical fiber having microstructures.

Fig. 17 is a view showing the calculated result of the chromatic dispersion and the effective core area of examples 4 - 6 and a comparison example 3 in a comparison form.

Fig. 18 is a cross-sectional view showing a modification of the embodiment of Fig.14.

Fig. 19 is a view showing the change of the chromatic dispersion D and the effective core area $A_{eff}$ to wavelength in examples 6, 6a, 6b and the comparison example 3 in a comparison form.

Fig. 20 is a view showing the ratio of optical power which propagates through a jacket region $P_{jacket}/P$ and the ratio of optical power which propagates through void $P_{air}/P$ in the comparison example 3 and examples 6, 6a, 6b in a comparison form.

Fig. 21 is a view showing an optical transmission path which adopts the optical fiber of the present invention.

Fig. 22 is a cross-sectional view of an optical fiber including microstructures which has been known conventionally.

DESCRIPTION OF THE PREFERRED EMBODIMENTS

Embodiments of the present invention are explained in conjunction with attached drawings hereinafter. To facilitate the comprehension of the explanation, the same reference numerals denote the same parts, where possible, throughout the drawings, and a repeated explanation will be omitted. Further, the size ratio of respective drawings does not necessarily agree with the size ratio of the explanation of the Mode for carrying out the Invention.

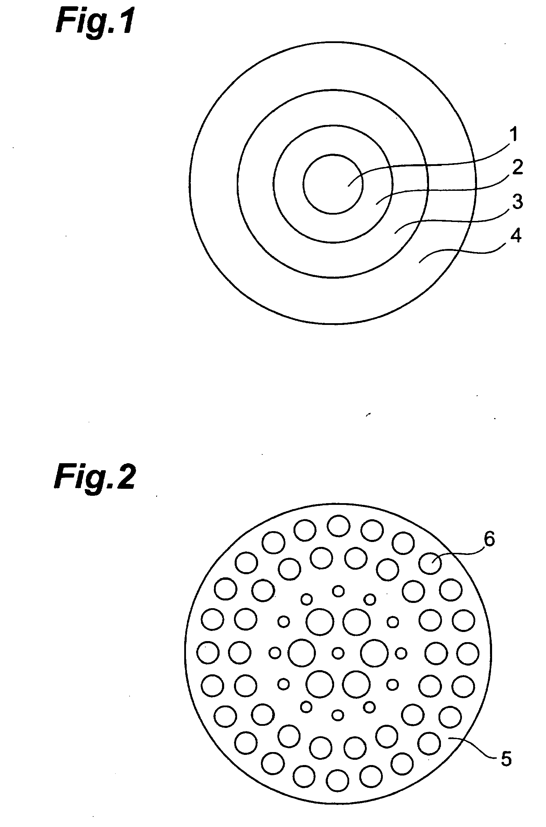

Fig. 1 is a view showing the division into regions on a transverse cross section of an optical fiber of a basic mode of the present invention. Fig. 2 is a transverse cross-sectional view for explaining microstructures of an optical fiber. As shown in Fig. 1, in this embodiment, this optical fiber is constituted by a core region 1, a first cladding region 2 which surrounds the core region 1, and a second cladding region 3 which surrounds the first cladding region 2 and a third cladding region 4 which surrounds the second cladding region 3. Further, as shown in Fig. 2, in an embodiment which does not form part of the invention, these respective regions are comprised of silica glass 5 as a main medium and a large number of voids 6 as sub-medium regions.

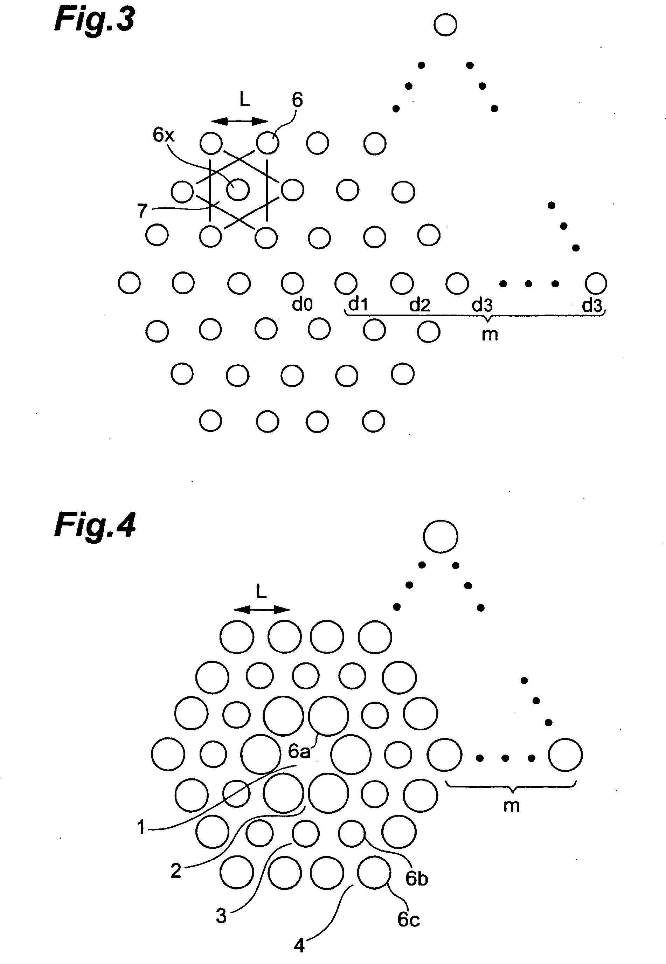

In the explanation made hereinafter, a concept called mean refractive indices is used as the refractive indices of respective regions. Since effective refractive indices are defined using an approximation, the definition is ambiguous and hence is not suitable for the description of the structure. Accordingly, this embodiment does not employ effective refractive indices. Fig. 3 is a view for explaining an example of a method for defining the mean refractive indices of the optical fiber of this embodiment. With respect to one void 6x focused in a certain region, perpendicular bisectors are drawn between this void 6x and other surrounding voids 6. Then, a polygon which is partitioned by these perpendicular bisectors and includes only one void 6x therein is defined. This polygon is called a cell 7. In this cell 7, the mean refractive index $n_{avg}$ can be calculated by the following equation.

$$ n_{avg} = \sqrt{\frac{n_g^2 \left( A_{cell} - A_{hole} \right) + n_h^2 A_{hole}}{A_{cell}}} \quad \cdots \quad (2) $$

where, $n_g$ is the refractive index of a fiber material portion, $n_h$ is the refractive index of the void 6x portion, $A_{cell}$ is a whole area of the cell 7, and $A_{hole}$ is an area of the void 6x. The mean refractive index $N_{avg}$ of a given region can be expressed by a following equation. In the equation, the cell numbers of the cells 7 included in the region is set from j to k, a mean refractive index and the cell area of the i-th cell 7 are respectively set as $n_{avg,i}$ and $A_{cell,i}$.

$$ N_{avg} = \sqrt{\frac{\sum_{i=j}^{k} n_{avg,i}^2 A_{cell,i}}{\sum_{i=j}^{k} A_{cell,i}}} \quad \cdots (3) $$

The present invention is characterized in that the relationship between the mean refractive index of the order cladding, defined by the equation (3), is set to satisfy the following relationship. That is, denoting respective refractive indices of the core region, the first inner cladding layer, the second inner cladding layer, the outer cladding region as $n_0$, $n_1$, $n_2$, $n_3$, the following relationship holds among them.

$n_0 > n_2 > n_1$ and $n_2 > n_3$

It is possible to set the mean refractive index $N_{avg}$ of a region containing voids by adjusting the magnitude of the voids 6. That is, by increasing or decreasing the cross-sectional area of the voids 6 per unit cross-sectional area, the rate between the silica glass 5 as the main medium and the voids 6 as the sub medium can be increased or decreased and hence, the mean refractive index $N_{avg}$ of the region can be set to an arbitrary value.

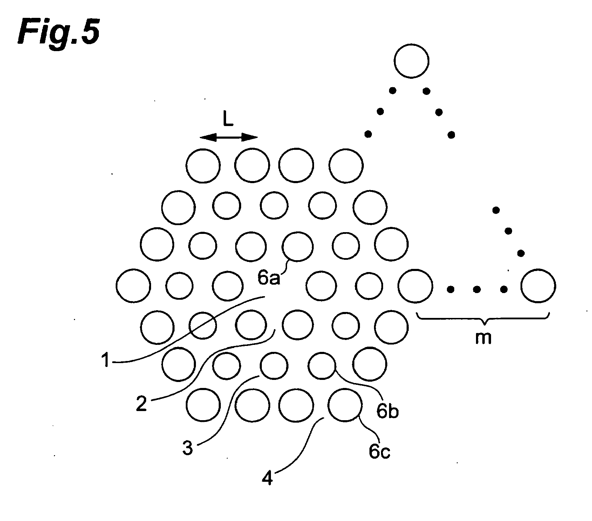

Fig. 4 and Fig. 5 are views showing respective cross-sectional structures of optical fibers of a first embodiment and a second embodiment which have the mean refractive index distribution thereof set in the above manner.

In the optical fiber of the first embodiment shown in Fig. 4, the voids 6 are not arranged in the core region 1 and the voids 6a to 6c are respectively arranged only in the first to third cladding regions 2 to 4 in the hexagonal lattices. In the inside of respective regions, the diameter of the voids 6 is made uniform and all voids are arranged at an equal pitch L. Then, assuming the diameter of the void 6a in the first cladding region 2 as $d_1$, the diameter of the void 6b in the second cladding region 3 as $d_2$ and the diameter of the void 6c in the third cladding region 4 as $d_3$, the relationship among the diameters of the voids of respective areas is set such that $d_1 > d_3 > d_2$. As a result, as can be understood from the equations (2) (3), the relationship among the mean refractive indices of respective regions is set to satisfy the following.

$n_0 > n_2 > n_3 > n_1$

With respect to the optical fiber of the second embodiment shown in Fig. 5 also, the void 6 is not arranged in the core region 1 and the voids 6a to 6c are respectively arranged only in the first to third cladding regions 2 to 4 in a hexagonal lattice form. The second embodiment has the same constitution as that of the first embodiment on the point that the diameter of the voids 6 in each region is uniform and all voids are arranged at an equal pitch L. What differs from the first embodiment is the relationship among the diameters of the voids 6 of the respective regions. That is, in this embodiment, the relationship is set to $d_3 \geq d_1 > d_2$. As a result, as can be understood from equations (2) (3), the relationship among the mean refractive indices of respective regions satisfies the following.

$n_0 > n_2 > n_1 \geq n_3$

Usually, since the viscosity of the main medium is lowered at the time of drawing the fiber, the deformation of the sub-medium regions is liable to be generated and this becomes a factor which brings about the deviation of the sub-medium occupying ratio in the fiber from a desired value. Here, the manners of deformation of the sub-medium regions in the core region and the sub-medium regions in respective cladding regions are substantially uniform in each region. Accordingly, when respective mean refractive indices are set such that the cross-sectional areas of the sub-medium regions in respective regions are made uniform, by adjusting the fiber drawing condition such that a certain sub-medium region has a desired occupying ratio, other sub-medium region in the same region has a desired occupying ratio whereby the fabrication of the optical fiber is facilitated.

The inventors have prepared three kinds of optical fibers of the first or second embodiment which differ in the diameter and the pitch of the voids 6 (called examples 1 to 3) and have carried out a comparison of characteristics between these optical fibers and conventional two kinds of microstructure optical fibers (called comparison examples 1, 2). The result of the comparison is reported hereinafter.

The ratios of the diameter of the void 6 to the pitch L in the first to third cladding regions 2 to 4 in the examples and comparison examples are shown in Table 1. Here, the number of layers m of the void 6 is set to 7.

Table 1. ratios of diameter to pitch of voids in respective examples

|  | 1st cladding region | 2nd cladding region | 3rd cladding region |
|---|---|---|---|
| Example 1 | 0.46 | 0.38 | 0.40 |
| Example 2 | 0.40 | 0.37 | 0.40 |
| Example 3 | 0.40 | 0.34 | 0.40 |
| Comparison example 1 | 0.46 | 0.40 | 0.40 |
| Comparison example 2 | 0.40 | 0.40 | 0.40 |

Here, the example 1 is the optical fiber of the first embodiment and the examples 2 and 3 are optical fibers of the second embodiment.

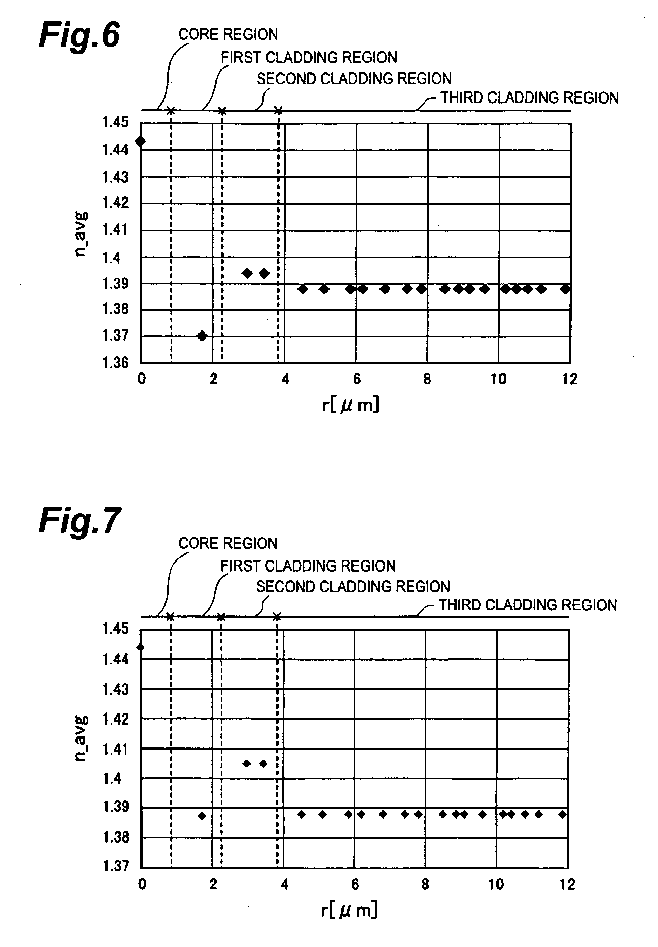

Fig. 6 and Fig. 7 are views expressed as scatter diagrams of the mean refractive indices $n_{avg}$ of respective cells relative to a distance r with respect to the first example 1 and the example 3 respectively. In these diagrams, the center P of each void 6 is set as the position of the cell 7 and the distance from an origin O (fiber axis) to P is set as r. Here, the calculation is made by setting the refractive index of silica glass 4 as 1.444 and the refractive index of air as 1.

In any one of examples, the mean refractive index in the second cladding region 3 is high since the diameter of the voids 6 is small, while the mean refractive index in the first cladding region 2 and the third cladding region 4 is low since the diameter of the voids 6 is large.

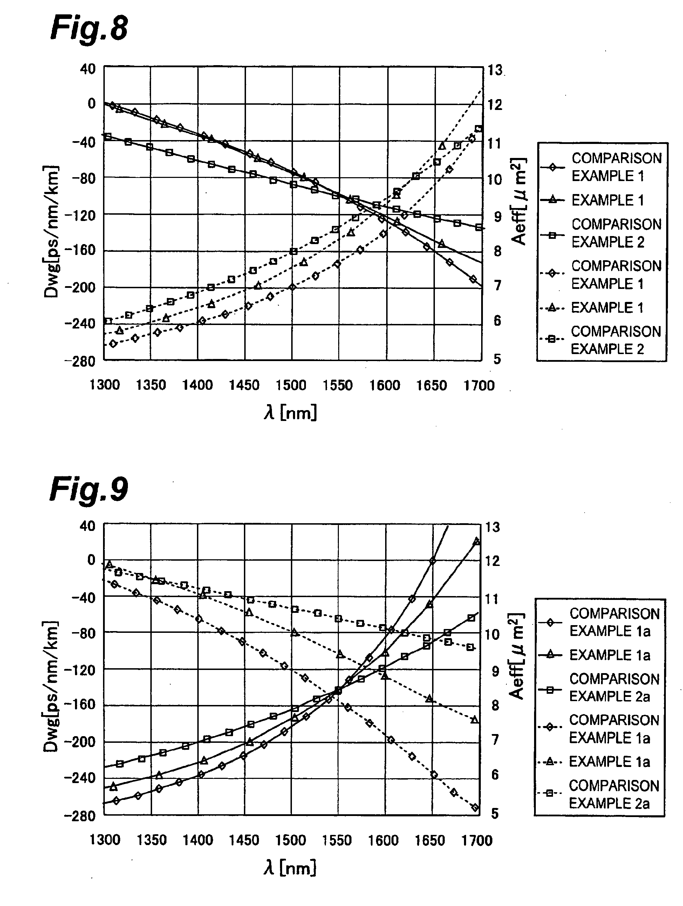

Fig. 8 shows the calculated result of the comparison between the example 1 and the comparison examples 1, 2 with respect to the structural chromatic dispersion $D_{wg}$ and the effective core area $A_{eff}$. In Fig. 8, the structural chromatic dispersion $D_{wg}$ is indicated on the left-side ordinate axis, the effective core area $A_{eff}$ is indicated on the right-side ordinate axis, and the optical wavelength $\lambda$ is indicated on the abscissa axis. Here, in all of example 1 and comparison examples 1, 2, the pitches L are set such that the structural chromatic dispersion $D_{wg}$ at the wavelength of 1550 nm becomes equal to - 100 ps/nm/km. That is, the values of the pitches L are respectively set to 1.66 $\mu$m in example 1, 1.62 $\mu$m in comparison example 1 and 1.48 $\mu$m in comparison example 2. The structural chromatic dispersion slope at the wavelength of 1550 nm is - 0.5 ps/nm$^2$/km in example 1 and comparison example 1 and this value is smaller than - 0.2 ps/nm$^2$/km which is the structural chromatic dispersion slope of comparison example 2. However, in example 1, the effective core area is set to 8.3 $\mu$m$^2$ and this value is larger than 7.7 $\mu$m$^2$ which is the effective core area of comparison example 1.

In this manner, the optical fiber of the first embodiment can obtain large negative chromatic dispersion. Accordingly, at the time of compensating for the dispersion of an other optical fiber having positive dispersion, the length of the optical fiber can be shortened. Further, simultaneous with the achievement of large negative chromatic dispersion and large negative chromatic dispersion slope, the effective core area can be increased. Accordingly, the nonlinear optical phenomena can be suppressed whereby transmission quality can be enhanced.

Fig. 9 is a view showing the calculated result of the respective structural chromatic dispersions and the effective core areas of example 1 and comparison examples 1, 2 when the pitches are changed (a suffix a being added to classify this case from the case shown in Fig. 8 hereinafter) in a comparison form. Here, the pitches L are set such that the effective core areas $A_{eff}$ of respective optical fibers at the wavelength 1550 nm become 8.4 $\mu$m$^2$. That is, the values of the pitches L are respectively set to 1.65 $\mu$m in example 1a, 1.54 $\mu$m in comparison example 1a and 1.60 $\mu$m in comparison example 2a.

Corresponding to the increase of the wavelength, the effective core areas are increased. Here, the increment pace $dA_{eff}/d\lambda$ of the effective core area $A_{eff}$ with respect to wavelength of example 1a is smaller than that of comparison example 1a. The fact that the increment pace of the effective core area with respect to wavelength is small in this manner implies that the light confinement to the core region is strong and the bending loss is small. Further, it also implies that the sensitivity of the effective core area to the structural parameters is low.

In this manner, since the light confinement is favorable and the bending loss is small, the effective core area can be increased. As a result, the occurrence of the nonlinear optical phenomena can be suppressed and hence, transmission quality can be enhanced.

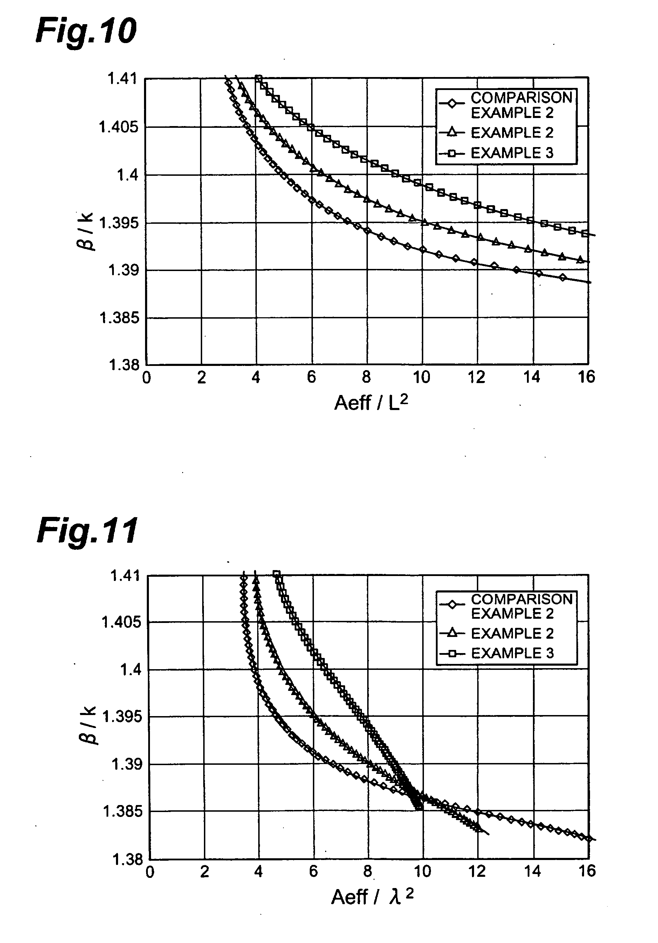

Fig. 10 shows the calculated result of the changing characteristics of the propagation coefficient $\beta$ with respect to effective core area $A_{eff}$ in examples 2, 3 and comparison example 2 in a comparison form. The value obtained by dividing the propagation coefficient $\beta$ by the wave number k is indicated on the ordinate axis and the value obtained by dividing the effective core area $A_{eff}$ with the square of the pitch L is indicated on the abscissa axis. In general, corresponding to the increase of the effective core area $A_{eff}$, the propagation coefficient $\beta$ is decreased. Corresponding to the decrease of the propagation coefficient $\beta$, the light confinement to the core region becomes weak and the bending loss is increased. Fig. 10 shows that example 2 exhibits higher light confinement to the core region than comparison example 2 thus decreasing the bending loss compared with comparison example 2, while example 3 exhibits higher light confinement to the core region than example 2 thus decreasing the bending loss compared with example 2. Accordingly, it has been confirmed that when compared under the condition that the effective core areas $A_{eff}$ are equal, example 2 can decrease the bending loss compared with comparison example 2 and the example 3 can decrease the bending loss compared with the example 2. It has been also confirmed that when compared under the condition that the bending losses are equal, example 2 can increase the effective core areas compared with comparison example 2 and example 3 can increase the effective core areas compared with example 2.

Fig. 11 is a view in which the value obtained by dividing the propagation coefficient $\beta$ by the wave number k is plotted with respect to the effective core area $A_{eff}$ normalized by the square of the wavelength $\lambda$. In general, corresponding to the increase of $\beta/k$, the bending loss becomes smaller. Assuming that the bending loss becomes practically sufficiently small when $\beta/k > 1.405$, as can be understood from Fig. 11, with respect to example 3, $A_{eff}/\lambda^2 = 5$ can be realized and an effective core area $A_{eff} = 12$ $\mu m^2$ can be realized at the wavelength $\lambda = 1550$ nm.

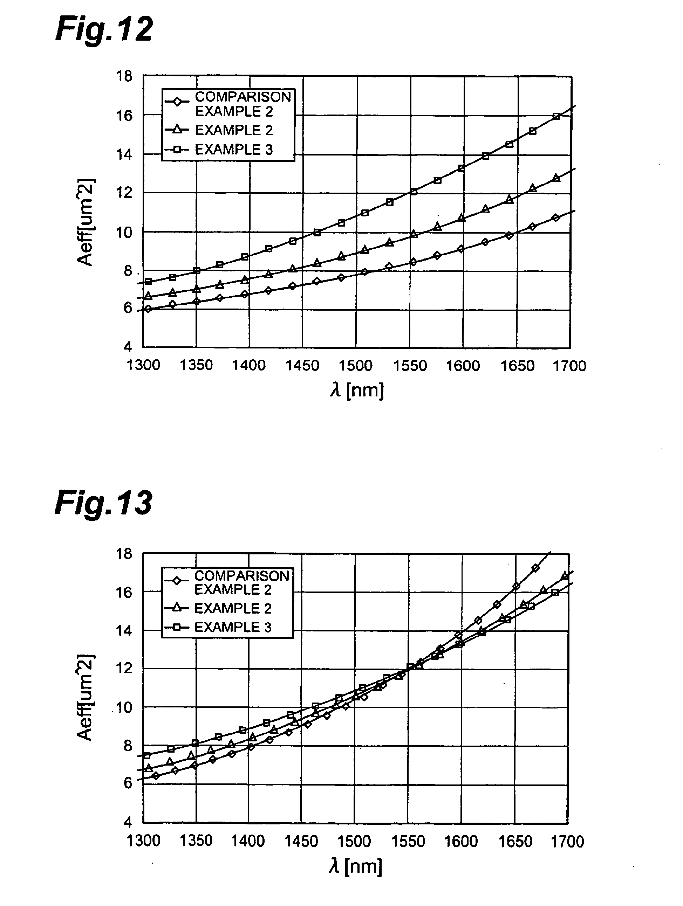

Fig. 12 shows the calculated result of the effective core area in examples 2, 3 and comparison example 2 in a comparison form. Here, the calculated result is the result obtained with the pitch being set to 1.53 $\mu$m in all of the examples 2, 3 and comparison example 2.

Focusing on the effective core area $A_{eff}$ at the wavelength X= 1550 nm, example 2 has larger effective core area $A_{eff}$ than comparison example 2 and example 3 has greater cross-sectional area $A_{eff}$ than example 2.

In this manner, according to the second embodiment, since the optical fiber has large effective core area, the occurrence of nonlinear optical phenomena can be suppressed whereby transmission quality can be enhanced.

Fig. 13 is a view which shows the calculated result of the effective core area when the respective pitches L of examples 2, 3 and comparison example 2 are changed in a comparison form. Here, the pitches L are set such that the effective core area $A_{eff}$ at the wavelength of 1550 nm becomes 12 $\mu m^2$ in all of the examples 2, 3 and comparison example 2. That is, the pitch values are respectively set to 1.33 $\mu$m in example 2, 1.53 $\mu$m in example 3 and 1.21 $\mu$m in comparison example 2.

Focusing on the change of the effective core area $A_{eff}$ at the wavelength $\lambda = 1550$ nm, with regard to the magnitude of the change of the effective core area $A_{eff}$ with respect to a change of the wavelength, the example 2 has a smaller magnitude of change of effective core area $A_{eff}$ than comparison example 2 and example 3 has a smaller magnitude of change of effective core area $A_{eff}$ than example 2. The fact that the magnitude of the change of effective core area $A_{eff}$ with respect to a change of the wavelength is low implies not only that the degree of the light confinement to the core region is high and the bending loss is small but also that the sensitivity of the characteristics of the effective core area $A_{eff}$ relative to the fluctuation of the structural parameters such as the pitch is small. In general, since the enlargement of the effective core area $A_{eff}$ brings about an increase of the bending loss, the fact that the bending loss obtained as the result of comparison under the same effective core area $A_{eff}$ is small implies that large effective core area $A_{eff}$ can be realized when compared under the same bending loss.

In this manner, according to the second embodiment, since the optical fiber has large effective core area, the occurrence of nonlinear optical phenomena can be suppressed whereby transmission quality can be enhanced.

As has been described heretofore, according to the optical fibers of the first and second embodiments, the optical fibers can ensure larger effective core area compared to conventional optical fibers and can reduce bending loss. Further, the optical fibers can reduce the sensitivity of the effective core area to the structural parameters.

Although the mode in which the voids are arranged in a hexagonal form in the above-mentioned embodiments has been explained, the mode of arrangement is not limited to this mode and the voids may be arranged in a square form, in a staggering form or in a concentric circle form. The arrangement in the square form or in the concentric circle form is suitable for reducing the polarization mode dispersion by substantially degenerating the polarization mode.

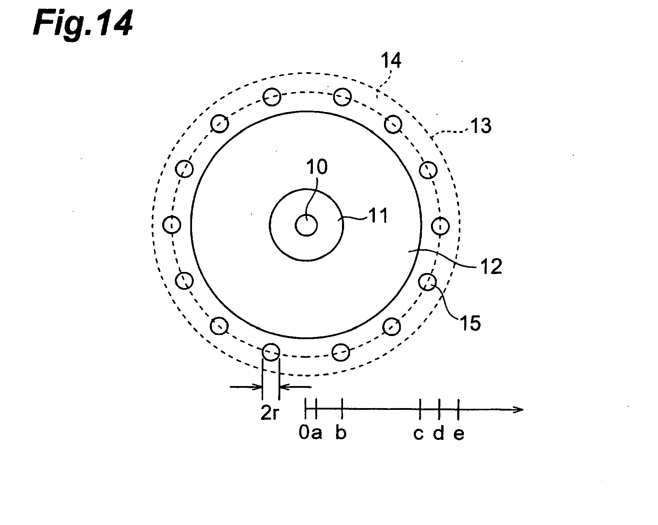

Subsequently, the optical fiber of the third embodiment of the present invention as claimed will be explained. Fig. 14 is a cross-sectional view showing the structure of the optical fiber of this third embodiment. This optical fiber includes a core region 10, a first inner cladding layer 11 which surrounds the core region 10, a second inner cladding layer 12 which surrounds the first inner cladding region 11 and an outer cladding region 13 which surrounds the second inner cladding layer 12. The core region 10 has a radius of a and a refractive index of $n_0$, the first inner cladding region 11 has an outer radius of b and a refractive index of $n_1$, the second inner cladding region 12 has an outer radius of c and a refractive index of $n_2$. The outer cladding region 13 is constituted by a main medium 14 having a refractive index of $n_{31}$ and sub-medium regions 15 having a refractive index of $n_{32}$. The sub-medium regions 15 are circles having a radius of r. These circles being N in number are equidistantly arranged on a circumference of a circle having a radius d about the fiber axis, which becomes the center. In such an arrangement, a four-fold rotational symmetry substantially holds with respect to the fiber axis. Further, an outer region around a circumference having a radius e which satisfies e > d + r has the refractive index $n_{31}$ which is uniform. This region is made of a material such as glass or polymer and constitutes a region which enhances the mechanical strength but has no influence on the optical characteristics. This region is called a jacket region" hereinafter.

In the optical fiber according to this embodiment, the values of respective parameters are as follows. That is, a = 1.37 $\mu$m, b = 4.9 $\mu$m, c = 14.7 $\mu$m, d = 17.8 $\mu$m, e = 20.9 $\mu$m, $n_2 = n_{31}$ = 1.444 (pure silica glass), $\Delta_0 = (n_0^2 - n_2^2)/(n_0^2 + n_2^2)$ = + 1.49 % (silica glass doped with 14.5 mol% of $GeO_2$), $\Delta_1 = (n_1^2 - n_2^2)/(n_1^2 + n_2^2)$ = - 0.36 % (silica based glass doped with 1.113 wt% of F), $n_{32}$ = 1.0 (void), N = 18.

That is, $n_0 > n_2 > n_1$ is established and the mean refractive index $n_3$ of the outer cladding region 13 can be made lower than the refractive index $n_2$ of the second inner cladding region 12 by arranging the voids and hence, $n_2 > n_3$ is established.

In this embodiment, since the medium which constitutes the second inner cladding layer and the jacket region and the main medium of the outer cladding region is the same (pure silica), the inner radius c and the outer radius e of the outer cladding region can be arbitrarily determined. Here, the inner radius c and the outer radius e are selected such that the thickness of the outer cladding region 13 ((e - c) = 6.2 $\mu$m) becomes approximately equal to the distance ($2\pi d/N$ = 6.2 $\mu$m) between neighboring voids in the outer cladding region 13 and d = (c + e)/2.

Using the above-mentioned respective parameters as common parameters, a simulation of the propagation characteristics has been performed with respect to three examples (examples 4 to 6) which differ in the diameter of the sub-medium regions (voids) 15 and a comparison example 3 which has no void. The radii of the voids of the examples 4, 5, 6 are respectively set to 0.363 $\mu$m, 0.722 $\mu$m and 1.431 $\mu$m.

Here, the mean refractive index $N_{avg}$ of the outer cladding region 13 at the wavelength of $\lambda$ = 1550 nm is set to 1.440 in example 4, 1.428 in example 5 and 1.380 in example 6. The relative mean refractive index difference of the first inner cladding layer 11 to the outer cladding region 13 ($\Delta_{03} = (n_0^2 - N_{avg}^2)/(n_0^2 + N_{avg}^2)$) is set to 1.77 % in example 4, 2.61 % in example 5 and 6.04 % in example 6.

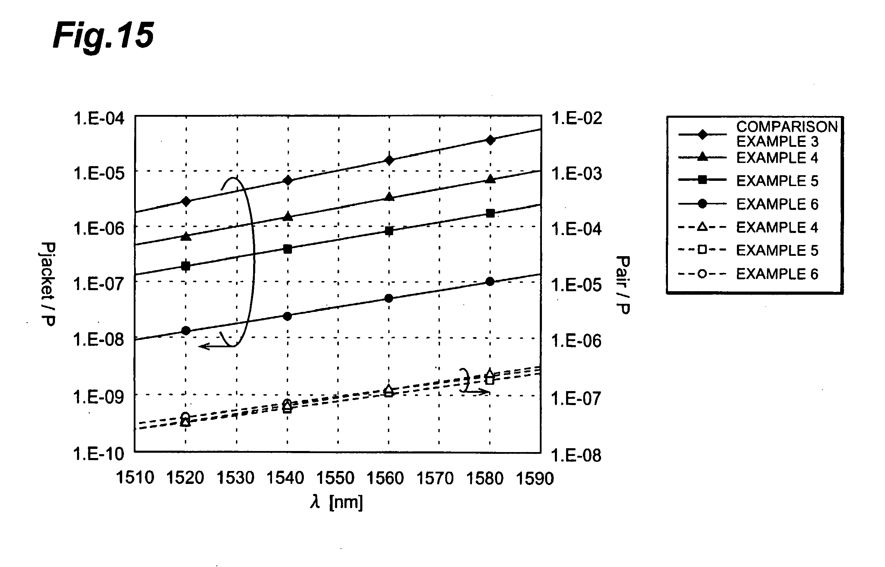

Fig. 15 is a graph showing the ratio of optical power which propagates through the jacket region to the total propagating power ($P_{jacket}/P$) and the ratio of optical power which propagates through the voids to the total propagating power ($P_{air}/P$) in comparison example 3 and examples 4 to 6 in a comparison form.

In examples 4 to 6, by introducing voids as the sub-medium regions 15 into the outer cladding region 13, the ratio of optical power which propagates through the jacket region to the total propagating power ($P_{jacket}/P$) is reduced compared to comparison example 3.

On the other hand, this ratio of optical power which propagates through the jacket region to the total propagating power ($P_{jacket}/P$) has a positive correlation with the bending loss. Accordingly, by introducing voids into the outer cladding region 13, an advantageous effect that the bending loss is reduced can be obtained. Accordingly, a highly reliable transmission path having low transmission loss can be realized.

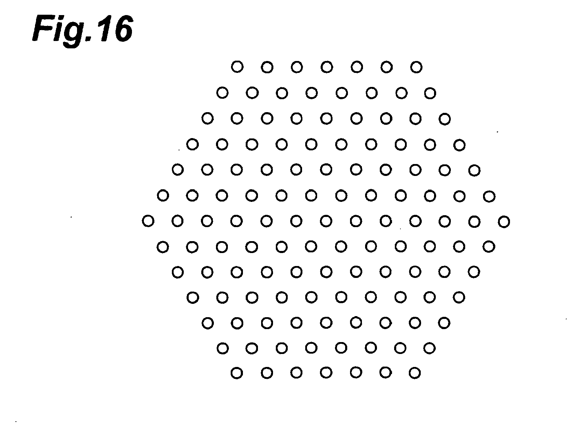

Further, the ratio of optical power which propagates through the voids to the total propagating power ($P_{air}/P$) is set to not more than $10^{-6}$. This contrasts remarkably with the fact that conventional optical fiber having microstructures has a large ratio of optical power which propagates through the voids to the total propagating power ($P_{air}/P$). For example, as shown in Fig. 16, in conventional optical fiber having microstructures where voids having a diameter of 0.68 $\mu$m are arranged in silica glass at a pitch of 1.7 $\mu$m, the ratio of optical power which propagates through the voids to the total propagating power ($P_{air}/P$) at the wavelength of $\lambda$ = 1550 nm is 0.039 which is $10^4$ times larger than that of the optical fiber of this embodiment. This large ratio of optical power which propagates through the voids to the total propagating power ($P_{air}/P$) has been the factor for generating an excess optical loss. To the contrary, in the optical fiber according to this embodiment, since the ratio of optical power which propagates through the voids to the total propagating power is small, the possibility that excess optical loss is generated can be reduced and the sensitivity of the chromatic dispersion characteristics to the shape of the voids can be also reduced whereby the demands on the fabrication technique can be alleviated.

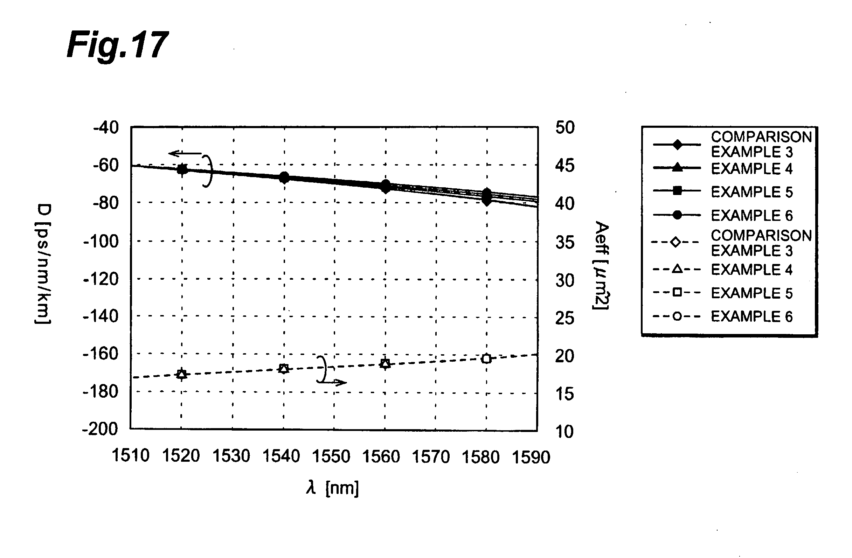

Fig. 17 is a view showing the calculated result of the structural chromatic dispersion and the effective core area of examples 4 to 6 and a comparison example 3 in a comparison form. In Fig. 17, the structural chromatic dispersion D is indicated on the left-side ordinate axis, the effective core area $A_{eff}$ is indicated on the right-side ordinate axis and the optical wavelength $\lambda$ is indicated on the abscissa axis. As shown in Fig. 17, it is understood that even when the voids are introduced into the outer cladding region 13, no substantial change is recognized with respect to the structural chromatic dispersion D and the effective core area $A_{eff}$.

Accordingly, the optical fiber of the third embodiment can reduce the sensitivity of the structural chromatic dispersion to the shape of the voids. Further, with the introduction of the voids, the bending loss can be reduced. In general, when the chromatic dispersion is displaced from a given value, deterioration of the transmission quality caused by the residual dispersion in the transmission path occurs and hence, high fabrication accuracy is required with respect to the chromatic dispersion. On the other hand, the bending loss is only required to be lower than a given threshold value, so no high fabrication accuracy is required with respect to the bending loss. In the optical fiber of this embodiment, although the bending loss depends on the shape of the voids, the chromatic dispersion does not depend on the shape of the voids and hence, the demands on the fabrication technique with respect to the accuracy of the shape of the voids can be alleviated.

In any one of examples 4 to 6, as in the case of comparison example 3, the optical fibers are operated under a single mode at the wavelength of $\lambda$ = 1550 nm. Accordingly, there is no multimode dispersion and hence, optical communication at a high bit rate can be realized. Further, since the arrangement of the voids substantially has four-fold rotational symmetry with respect to the fiber axis, the mode birefringence B at the wavelength of $\lambda$ = 1550 nm becomes $1.5 \times 10^{-7}$ in example 4, $1.5 \times 10^{-7}$ example 5 and $1.5 \times 10^{-7}$ in example 6 and these values are similar to or rather less than the $1.7 \times 10^{-7}$ of comparison example 3 and hence can be ignored. Since the mode birefringence is small, the polarization mode dispersion becomes small whereby optical communication at a high bit rate can be realized.

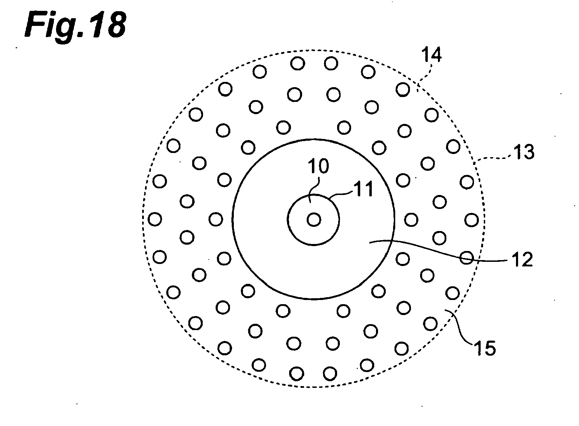

In the above explanation, a case in which the small regions (voids) of the sub-medium regions 15 in the outer cladding region 13 are arranged on the circumference of one circle having its center at the fiber axis has been explained. However, the present invention is not limited to this and may adopt other constitutions that fall within the scope of the claims. That is, as shown in Fig. 18, the small regions may be arranged on the circumferences of a plurality of concentric circles having their centers at the fiber axis. In this manner, by arranging the small regions of the sub-medium regions on the circumferences of a plurality of concentric circles, the thickness (e - c) of the outer cladding region 13 can be increased.

With the introduction of the voids as the sub-medium regions 15 to the outer cladding region 13, the optical power $P_{jacket}/P$ which leaks to the jacket is reduced and hence, an advantageous effect that the bending loss is reduced can be obtained. In addition to the above, by increasing the thickness of the outer cladding region 13, an advantageous effect that the optical power which leaks through the outer cladding region 13 is also reduced can be obtained. Accordingly, the optical fiber can further reduce the bending loss.

Subsequently, the result obtained by comparing the characteristics of optical fiber examples 6a, 6b which respectively reduce only the radius a of the core region 10 of the example 6 to 1.29 $\mu$m and 1.27 $\mu$m, the characteristics of example 6 and the characteristics of comparison example 3 is explained.

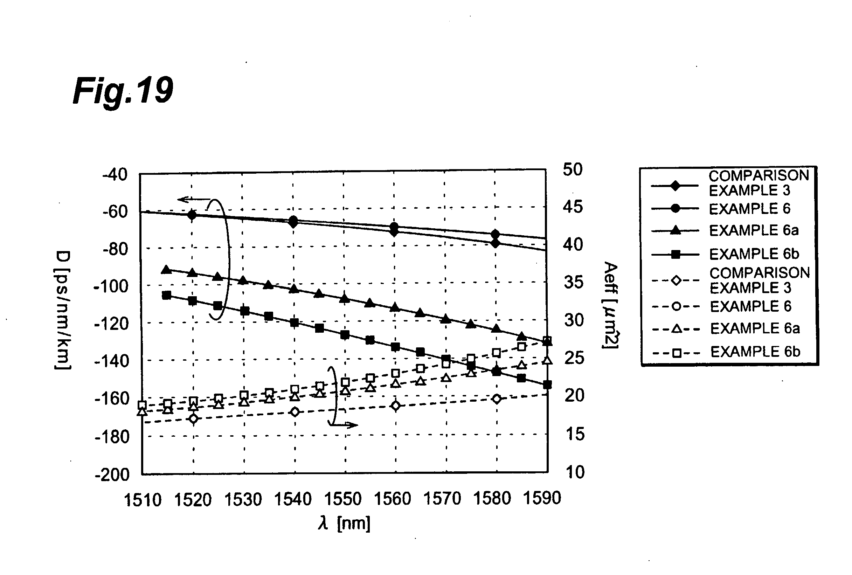

Fig. 19 is a view showing the change of the chromatic dispersion D and the effective core area $A_{eff}$ with respect to wavelength in examples 6, 6a, 6b and comparison example 3 in a comparison form. As can be understood from Fig. 19, examples 6a, 6b have larger negative chromatic dispersions D than comparison example 3 and example 6, have large negative chromatic dispersion slope S, and have large effective core areas $A_{eff}$.

To review the values of chromatic dispersion D at the wavelength of $\lambda$ = 1550 nm, the chromatic dispersion D is set to -69 ps/nm/km in comparison example 3, -67 ps/nm/km in example 6, -108 ps/nm/km in example 6a and-127 ps/nm/km in example 6b. The chromatic dispersion slope S is set to -0.25 ps/nm$^2$/km in comparison example 3, -0.20 ps/nm$^2$/km in example 6, -0.53 ps/nm$^2$/km in example 6a and -0.67 ps/nm$^2$/km in example 6b. The effective core areas $A_{eff}$ are set to 18 $\mu$m$^2$ in comparison example 3 and example 6, 21 $\mu$m$^2$ in example 6a and 22 $\mu$m$^2$ in example 6b. That is, examples 6a, 6b can have larger negative chromatic dispersion, larger negative dispersion slope and larger effective core area compared with comparison example 3 and example 6.

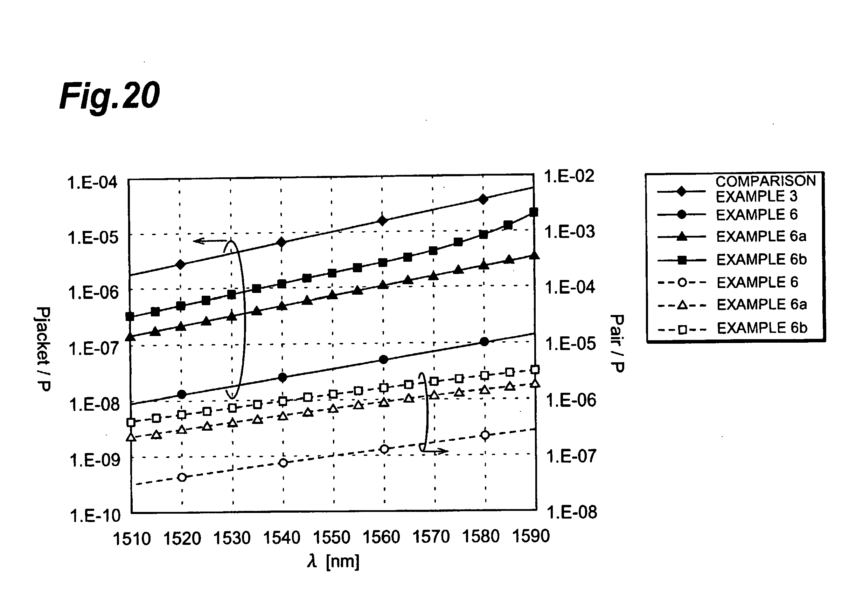

Fig. 20 is a view showing the ratio of optical power which propagates through the jacket region to the total propagating power ($P_{jacket}/P$) and the ratio of optical power which propagates through the voids to the total propagating power ($P_{air}/P$) in comparison example 3 and examples 6, 6a, 6b in a comparison form. Although examples 6a, 6b exhibit a larger ratio of optical power which propagates through the jacket region to the total propagating power ($P_{jacket}/P$) than example 6, examples 6a, 6b exhibit a smaller ratio of optical power which propagates through the jacket region to the total propagating power ($P_{jacket}/P$) than comparison example 3. That is, examples 6a, 6b can simultaneously achieve large negative chromatic dispersion, large negative chromatic dispersion slope, large effective core area and small bending loss compared with comparison example 3.

Further, in any one of these structures, the optical fiber is operated in a single mode at the wavelength of $\lambda$ = 1550 nm. Further, the mode birefringence B is set to $1.2 \times 10^{-6}$ in example 6a and to $2.9 \times 10^{-6}$ in example 6b and hence, the mode birefringence B can be ignored.

Accordingly, in the optical fiber according to this embodiment, the bending loss is reduced by introducing the voids into the outer cladding region 13 and, at the same time, the structure of the inner region is selected such that the increase of the negative chromatic dispersion, the negative chromatic dispersion slope and the effective core area which exceeds the lowering range of the bending loss can be obtained. As a result, compared with conventional impurity-doped optical fiber in which the outer cladding region 13 is constituted by a homogeneous medium, the optical fiber of this embodiment can realize low bending loss, large negative chromatic dispersion, large negative chromatic dispersion slope and large effective core area simultaneously. The fact that the negative chromatic dispersion and the negative chromatic dispersion slope are large implies that the length of the fiber for compensating for positive chromatic dispersion and positive chromatic dispersion slope can be shortened and the fact that the effective core area is large implies that the deterioration of transmission quality caused by nonlinear optical effects is small.

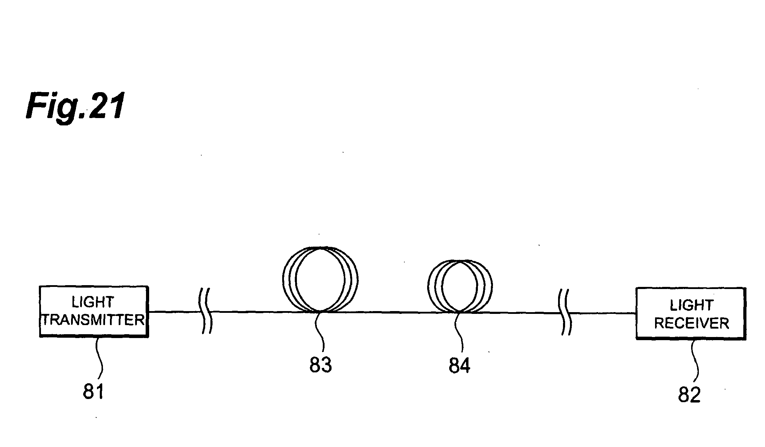

Since the optical fiber of the above-mentioned embodiment has large negative dispersion and large effective core area, when the optical fiber is combined with an optical fiber having positive dispersion, an optical transmission path having a large communication capacity can be made. An example of an optical transmission path shown in Fig. 21 is comprised of a light transmitter 81, a light receiver 82, a positive dispersion optical fiber 83 and a negative chromatic dispersion optical fiber 84 according to the above-mentioned embodiment. In general, in an optical transmission path which is formed by combining a positive dispersion optical fiber and a negative chromatic dispersion optical fiber, the deterioration of the transmission quality caused by nonlinear optical effects in the negative chromatic dispersion optical fiber becomes a problem and the influence of nonlinear optical effects is increased corresponding to the increase of the effective core area and the fiber length of the negative chromatic dispersion optical fiber. However, the negative chromatic dispersion optical fiber according to the present invention has large effective core area and negative chromatic dispersion having a large absolute value so that the length of the optical fiber necessary for dispersion compensation can be shortened. Accordingly, the influence of nonlinear optical effects can be reduced so that an optical transmission path with the least deterioration of transmission quality can be realized.

According to the present invention, a material such as air or liquid which cannot be used alone as a material of the outer cladding region can be used as the sub medium of the outer cladding region. By selecting the refractive index of the sub medium such that the refractive index of the sub medium becomes lower than the refractive index of the main medium, it becomes possible to reduce the mean refractive index of the outer cladding region compared with a case that the outer cladding region is made of only the main medium.

As a result, it becomes possible to reduce the bending loss compared with conventional impurity-doped optical fiber. On the other hand, the magnitude of the negative chromatic dispersion, the magnitude of the negative chromatic dispersion slope and the magnitude of the effective core area have a trade-off relationship with the lowering of the bending loss. Accordingly, when the optical fiber of the present invention and conventional impurity-doped optical fiber are compared under a condition that their bending losses are equal, the optical fiber of the present invention can realize negative chromatic dispersion of a larger absolute value, negative chromatic dispersion slope of a larger absolute value and larger effective core area compared with conventional impurity-doped optical fiber. The fact that the absolute values of the negative chromatic dispersion and the negative chromatic dispersion slope are large implies that the fiber length necessary for compensating for the positive dispersion and the positive dispersion slope in the transmission path can be shortened. Further, since the optical fiber of the present invention has large effective core area, the deterioration of the transmission characteristics caused by nonlinear optical effects can be suppressed. Further, since the bending loss is small, the optical fiber according to the present invention is applicable to a miniaturized dispersion compensation module and the reliability of the optical fiber when used as an optical transmission path can be enhanced.

Further, the optical fiber according to the present invention can obtain negative chromatic dispersion of a larger absolute value compared with conventional air-cladding optical fiber. This is because the first inner cladding layer, which has the refractive index lower than the refractive indices of both of the core region and the second inner cladding layer, is present in the optical fiber.

Further, according to the present invention, the excess optical loss can be suppressed compared to conventional microstructure optical fiber. This is because the region where the sub-medium regions are present is disposed away from the core region. It is considered that the excess optical loss is generated due to the sub-medium regions such as voids. However, according to the optical fiber of the present invention, since the first inner cladding layer and the second inner cladding layer are present between the outer cladding region in which the sub-medium regions are included and the core region to which the optical power is concentrated, the ratio of the optical power which propagates through the sub-medium regions and an interface between the sub-medium regions and the main medium is smaller compared to conventional microstructure optical fiber. As a result, the optical loss caused by the sub-medium regions can be made small.

Further, when voids are used as the small regions constituting the sub medium regions, the optical fiber can be fabricated much more easily than conventional optical fiber having microstructures. Two reasons are considered. The first reason is that the sensitivity of the chromatic dispersion characteristics to the shape of the small regions constituting the sub-medium regions can be reduced due to such a constitution. In the optical fiber of the present invention, the first inner cladding layer and the second inner cladding layer are present between the core region and the sub-medium regions (for example, voids) introduced into the outer cladding region Accordingly, the chromatic dispersion is controlled by the core region, the first inner cladding layer and the second inner cladding layer disposed in the vicinity of the core region and the influence that the outer cladding region gives to the chromatic dispersion characteristics can be ignored. Accordingly, the demands on the accuracy of the shape of the small regions constituting the sub-medium regions is alleviated and hence, the optical fiber can be fabricated more easily compared with conventional optical fiber having microstructures.

The second reason is that the total number of voids is small. Two methods for producing the preform are a method which bundles silica tubes and a method which forms holes in the preform using a piercing instrument. Whichever method is adopted, since the number of voids can be reduced, the cumbersomeness at the time of fabricating the optical fiber can be reduced.

**Claims**

1. A dispersion compensating optical fiber comprising:

   a core region (10) constituted by a substantially homogeneous medium;
   a cladding region having not less than three layers (11, 12, 13) which surround said core region (10) in order, at least one of said layers (11, 12, 13) having a lower mean refractive index than both adjacent layers, at least one layer being provided with a plurality of sub-medium regions (15) each having a refractive index lower than a main medium (14) constituting said at least one layer, **characterised in that** the mean refractive index $n_{avg}$ of a cell area $A_{cell}$ is defined by the following equation:

$$n_{avg} = \sqrt{\frac{n_s^2 \left( A_{cell} - A_{hole} \right) + n_h^2 A_{hole}}{A_{cell}}}$$

   where $n_g$ is the refractive index of said main medium, $n_h$ is the refractive index of said sub medium, $A_{hole}$ is the area of a single one of said sub-medium regions included in said cell, and
   the mean refractive index $N_{avg}$ of a given region is defined by the following equation:

$$N_{avg} = \sqrt{\frac{\sum_{i=j}^{k} n_{avg,i}^2 A_{cell,i}}{\sum_{i=j}^{k} A_{cell,i}}}$$

   where the cell numbers of the cells included in the region is set from j to k, a mean refractive index and the cell area of the i-th cell are respectively denoted by $n_{avg,i}$ and $A_{cell,i}$,
   and wherein said cladding region is further constituted by an inner cladding region having a two-layer structure consisting of a first inner cladding layer (11) and a second inner cladding layer (12), whereby each layer is made of a substantially homogeneous medium and has a refractive index different from that of the other layer, and an outer cladding region (13) surrounding said inner cladding region being provided with said sub-medium regions (15), and the following relationships hold among the respective refractive indices $n_0$, $n_1$, $n_2$ of said core region, said first inner cladding layer (11), said second inner cladding layer (12) and the mean refractive index $n_3$ of said outer cladding region (13),
   $n_0 > n_2 > n_1$ and $n_2 > n_3$.

2. An optical fiber according to claim 1, wherein said sub-medium regions (15) in said outer cladding region (13) are arranged as having four-fold rotational symmetry.

3. An optical fiber according to claim 1, wherein said main medium (14) of said outer cladding region (13) is made of silica and said sub-mediums (15) are gaseous or vacuum.

4. An optical fiber according to claim 3, wherein the relative mean refractive index difference between said core region (10) and said outer cladding region (13) is set to not less than 2 %.

5. An optical fiber according to claim 3, wherein the relative mean refractive index difference between said first inner cladding layer (11) and said second inner cladding layer (12) is set to not more than - 0.1 %.

6. An optical fiber according to claim 3, wherein the ratio of the optical power which propagates through said sub-medium regions (15) of said outer cladding region (13) to the total propagating power is set to not more than 1 %.

7. An optical fiber according to claim 1, wherein said optical fiber is operated in a single mode at a wavelength of 1550 nm.

8. An optical fiber according to claim 1, wherein the chromatic dispersion at a wavelength of 1550 nm is set to a value below - 60 ps/nm/km.

9. An optical transmission path including said optical fiber according to claim 8 and an optical fiber having positive chromatic dispersion at a wavelength of 1550 nm.

**Patentansprüche**

1. Eine dispersionskompensierende optische Faser, umfassend:

   eine Kernregion (10), die durch ein im Wesentlichen homogenes Medium aufgebaut ist;
   eine Ummantelungsregion, die nicht weniger als drei Schichten (11, 12, 13) aufweist, welche die Kernregion (10) in der Reihenfolge umschließt,

wobei mindestens eine der Schichten (11, 12, 13) einen niedrigeren mittleren refraktiven Index aufweist als beide angrenzenden Schichten, mindestens eine Schicht mit einer Vielzahl von Submedium-Regionen (15) ausgestattet ist, wobei jede einen refraktiven Index aufweist, der kleiner als ein Hauptmedium (14) ist, das die mindestens eine Schicht aufbaut,
**dadurch gekennzeichnet, dass**
der mittlere refraktive Index $n_{avg}$ eines Zellgebietes $A_{cell}$ durch die nachfolgende Gleichung definiert wird:

$$n_{avg} = \sqrt{\frac{n_g^2(A_{cell} - A_{hole}) + n_h^2 A_{hole}}{A_{cell}}}$$

wobei $n_g$ der refraktive Index des Hauptmediums ist, $n_h$ der refraktive Index des Submediums ist, $A_{hole}$ das Gebiet einer einzigen der Submedium-Regionen ist, die in der Zelle eingeschlossen sind, und
der mittlere refraktive Index $N_{avg}$ einer gegebenen Region durch die folgende Gleichung definiert ist:

$$N_{avg} = \sqrt{\frac{\sum_{i=j}^{k} n_{avg,i}^2 A_{cell,i}}{\sum_{i=j}^{k} A_{cell,i}}}$$

wobei die Zellenanzahlen der Zellen, die in der Region eingeschlossen sind, von j bis k eingesetzt wird, ein mittlerer refraktiver Index und das Zellgebiet der i-ten Zelle jeweils als $n_{avg,i}$ und $A_{cell,i}$ bezeichnet ist,
und wobei die Ummantelungsregion weiterhin durch eine innere Ummantelungsregion, die eine Zweilagenstruktur aufweist, die aus einer ersten inneren Ummantelungsschicht (11) und einer zweiten inneren Ummantelungsschicht (12) besteht, wobei jede Schicht aus einem im Wesentlichen homogenen Material hergestellt ist und einen refraktiven Index aufweist, der unterschiedlich zu demjenigen der anderen Schicht ist, und durch eine äußere Ummantelungsregion (13) aufgebaut ist, die die innere Ummantelungsregion umschließt und die mit den Submedium-Regionen (15) ausgestattet ist, und die folgenden Beziehungen zwischen den jeweiligen refraktiven Indices $n_0$, $n_1$, $n_2$ der Kernregion, der ersten inneren Ummantelungsschicht (11), der zweiten inneren Ummantelungsschicht (12) und dem mittleren refraktiven Index $n_3$ der äußeren Ummantelungsregion (13) gilt,
$n_0 > n_2 > n_1$ und $n_2 > n_3$.

2. Eine optische Faser gemäß Anspruch 1, wobei die Submedium-Regionen (15) der äußeren Ummantelungsregion (13) so angeordnet sind, dass sie eine vierfache Rotationssymmetrie aufweisen.

3. Eine optische Faser gemäß Anspruch 1, wobei das Hauptmedium (14) der äußeren Ummantelungsregion (13) aus Quarz hergestellt ist und die Submedien (15) gasförmig oder Vakuum sind.

4. Eine optische Faser gemäß Anspruch 3, wobei die relative Differenz des mittleren refraktiven Index zwischen der Kernregion (10) und der äußeren Ummantelungsregion (13) auf nicht weniger als 2 % eingestellt wird.

5. Eine optische Faser gemäß Anspruch 3, wobei die Differenz des relativen mittleren refraktiven Index zwischen der ersten inneren Ummantelungsschicht (11) und der zweiten inneren Ummantelungsschicht (12) auf nicht mehr als - 0,1 % eingestellt wird.

6. Eine optische Faser gemäß Anspruch 3, wobei das Verhältnis der optischen Leistung, die sich durch die Submedium-Regionen (15) der äußeren Ummantelungsregion (13) ausbreitet zu der gesamten, sich ausbreitenden Leistung auf nicht mehr als 1,0 % eingestellt wird.

7. Eine optische Faser gemäß Anspruch 1, wobei die optische Faser in einer einzigen Mode bei einer Wellenlänge von 1550 nm betrieben wird.

8. Eine optische Faser gemäß Anspruch 1, wobei die chromatische Dispersion bei einer Wellenlänge von 1550 nm auf einen Wert unterhalb - 60 ps/nm/km gesetzt wird.

9. Ein optischer Übertragungsweg, der die optische Faser gemäß Anspruch 8 und eine optische Faser einschließt, die eine positive chromatische Dispersion bei einer Wellenlänge von 1550 nm aufweist.

**Revendications**

1. Fibre optique à compensation de dispersion comprenant :

une zone centrale (10) constituée d'un milieu sensiblement homogène ;
une zone de placage ayant au moins trois couches (11, 12, 13) qui entourent ladite zone centrale (10) dans l'ordre, au moins une desdites couches (11, 12, 13) ayant un indice de réfraction moyen inférieur aux deux couches adjacentes, au moins une couche étant dotée d'une pluralité de zones de sous-milieu (15) ayant chacune un indice de réfraction inférieur à un milieu principal (14) constituant ladite au moins une couche, **caractérisé en ce que** l'indice de réfraction moyen $n_{avg}$ d'une zone de cellule $A_{cell}$ est définie par l'équation suivante :

$$n_{avg} = \sqrt{\frac{n_g^2\left(A_{cell} - A_{hole}\right) + n_h^2 A_{hole}}{A_{cell}}}$$

où $n_g$ est l'indice de réfraction dudit milieu principal, $n_h$ est l'indice de réfraction dudit sous-milieu, $A_{hole}$ est la superficie d'une seule desdites zones de sous-milieux comprises dans ladite cellule, et
l'indice de réfraction moyen $N_{avg}$ d'une zone donnée est défini par l'équation suivante :

$$N_{avg} = \sqrt{\frac{\sum\limits_{i=j}^{k} n_{avg,i}^2 A_{cell,i}}{\sum\limits_{i=j}^{k} A_{cell,i}}}$$

où les numéros de cellule des cellules comprises dans la zone sont fixés de j à k, un indice de réfraction moyen et la superficie de la cellule de la $i^{ème}$ cellule sont respectivement représentés par $n_{avg,i}$ et $A_{cell,i}$,

et dans laquelle une zone de placage est ultérieurement constituée d'une zone de placage interne ayant une structure en deux couches consistant en une première couche de placage (11) et une seconde couche de placage interne (12), moyennant quoi chaque couche est constituée d'un milieu sensiblement homogène et a un indice de réfraction différent de celui de l'autre couche, et une zone de placage externe (13) entourant ladite zone de placage interne dotée desdites zones de sous-milieu (15) et les relations suivantes restent parmi les indices de réfraction respectifs $n_0$, $n_1$, $n_2$ de ladite zone centrale, ladite première couche de placage interne (11), ladite seconde couche de placage interne (12) et l'indice de réfraction moyen $n_3$ de ladite zone de placage externe (13).

$n_0 > n_2 > n_1$ et $n_2 > n_3$.

2. Fibre optique selon la revendication 1, dans laquelle lesdites zones de sous-milieu (15) dans ladite zone de placage externe (13) sont disposées comme ayant une symétrie en rotation en quatre fois.

3. Fibre optique selon la revendication 1, dans laquelle ledit milieu moyen (14) de ladite zone de placage externe (13) est fait de silice et lesdits sous-milieux (15) sont gazeux ou vides.

4. Fibre optique selon la revendication 3, dans laquelle la différence d'indice de réfraction moyen relatif entre ladite zone centrale (10) et ladite zone de placage externe (13) est réglée à au moins 2%.

5. Fibre optique selon la revendication 3, dans laquelle la différence d'indice de réfraction moyen relatif entre ladite première couche de placage interne (11) et ladite seconde couche de placage interne (12) est réglée pour ne pas dépasser - 0,1%.

6. Fibre optique selon la revendication 3, dans laquelle le rapport entre la puissance optique qui se propage à travers lesdites zones de sous-milieu (15) de ladite zone de placage externe (13) et la puissance de propagation totale est réglé à un maximum de 1%.

7. Fibre optique selon la revendication 1, dans laquelle ladite fibre optique fonctionne dans un mode unique à une longueur d'onde de 1550 nm.

8. Fibre optique selon la revendication 1, dans laquelle la dispersion chromatique à une longueur d'onde de 1550 nm est établie à une valeur inférieure à - 60 ps/nm/km.

9. Voie de transmission optique comprenant ladite fibre optique selon la revendication 8 et une fibre optique ayant une dispersion chromatique positive à une longueur d'onde de 1550 nm.

## Fig.1

## Fig.2

*Fig.3*

*Fig.4*

# Fig.5

**Fig.6**

**Fig.7**

## Fig.8

## Fig.9

## Fig.10

## Fig.11

## Fig.12

## Fig.13

*Fig.14*

## Fig.15

# Fig.16

Fig.17

EP 1 118 887 B1

*Fig.18*

*Fig.19*

**Fig.20**

EP 1 118 887 B1

## Fig.21

| LIGHT TRANSMITTER | | | | LIGHT RECEIVER |

81          83        84          82

*Fig.22*